## Europäisches Patentamt

## European Patent Office

## Office européen des brevets

(19)

(11) Veröffentlichungsnummer: **0 143 929**
**B1**

(12)

# EUROPÄISCHE PATENTSCHRIFT

(45) Veröffentlichungstag der Patentschrift:
09.12.87

(21) Anmeldenummer: **84111386.3**

(22) Anmeldetag: **25.09.84**

(51) Int. Cl.⁴: **F 16 H 55/56**

(54) **Riemenscheibe für ein Verstellgetriebe.**

(30) Priorität: **02.11.83 DE 8331358 U**

(43) Veröffentlichungstag der Anmeldung:
**12.06.85 Patentblatt 85/24**

(45) Bekanntmachung des Hinweises auf die Patenterteilung:
**09.12.87 Patentblatt 87/50**

(84) Benannte Vertragsstaaten:
**AT BE CH DE FR GB IT LI LU NL SE**

(56) Entgegenhaltungen:
**DE - A - 2 210 132**
**DE - A - 2 404 385**
**DE - A - 3 147 693**
**US - A - 2 842 355**
**US - A - 3 499 341**

(73) Patentinhaber: **Maschinenfabrik Hans Lenze GmbH & Co, Breslauer Strasse 3, D-4923 Extertal-Bösingfeld (DE)**

(72) Erfinder: **Möller, Reinhard, Widdenserweg 175, D-3061 Ahnsen (DE)**

(74) Vertreter: **Elbertzhagen, Otto et al, Patentanwälte Thielking & Elbertzhagen Gadderbaumer Strasse 20, D-4800 Bielefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Riemenscheibe für ein Verstellgetriebe mit zumindest einer auf einer Nabe axial verschieblichen und darauf drehfest gelagerten Verstellscheibe sowie mit einem dazu koaxial nach aussen hin auf der Nabe festgelegten Federstützring, wobei zwischen dem und der Verstellscheibe wenigstens eine Druckfeder angeordnet ist.

Eine solche Riemenscheibe besitzt in der Regel zwei Verstellscheiben, die auf einer gemeinsamen Nabe gelagert sind. Die Verstellscheiben besitzen an ihren Innenseiten keilförmig konvergierende Flanken, auf denen sich ein Keilriemen abstützt. Der wirksame Radius des Umschlingungsabschnitts, auf dem der Keilriemen läuft, wird durch den Abstand der beiden Verstellscheiben bestimmt. Dieser Abstand stellt sich infolge eines Kräftegleichgewichts zwischen einer zu den Achsen der Verstellscheibe parallelen Komponente der Riemenzugkraft und den Gegenkräften der Druckfedern zwischen den Verstellscheiben und den Federstützringen ein, wodurch die Möglichkeit besteht, falls der Riemen über eine weitere Scheibe mit konstantem Wirkdurchmesser läuft, durch den Abstand zwischen dieser Scheibe und der aus der Verstellscheibe bestehenden Riemenscheibe das Übersetzungsverhältnis zu ändern, denn der Riemen besitzt eine gleichbleibende Länge und muss sich daher bei geändertem Achsabstand zwischen den beiden Riemenscheiben an der Riemenscheibe mit den gefederten Verstellscheiben auf einen anderen Wirkradius einstellen.

Eine Riemenscheibe mit den Gattungsmerkmalen des Anspruchs 1 ist aus der DE-A-31 47 693 bekannt. Die Radialnut benachbart dem polygonförmigen Endabschnitt der Nabe nimmt hier einen Federring auf, der zugleich in eine Innennut im Bereich der zentralen, polygonförmigen Aufnahmeöffnung im Flansch des Federstützringes eingreift. Nach der Erstmontage ist deshalb der Federstützring nur noch unter erheblichen Schwierigkeiten sowie bei Inkaufnahme einer Zerstörung des Federringes von der Nabe entfernbar. Die polygonförmige Aufnahmeöffnung des Flansches des Federstützringes korrespondiert mit dem polygonförmigen Endabschnitt der Nabe zur drehmomenten Übertragung. Da die gefederte Verstellscheibe nicht spielfrei auf der Nabe verschieblich gelagert werden kann, ergibt sich umlaufend eine Kippbewegung der Verstellscheibe, weil die Verstellscheibe im Umschlingungsbereich des Riemens nach aussen gedrückt wird. Diese Kippbewegung überträgt sich über die Druckfedern auf den Federstützring, der in Axialrichtung durch den erwähnten Sicherungsring gehalten wird. Infolge der dauernden Kippbeanspruchungen unterliegen sowohl der Sicherungsring als auch die das Drehmoment übertragenden Polygonflächen einem erheblichen Verschleiss. Es kann zu einem Bruch des Federringes und zu Passungsrost zwischen der Aufnahmeöffnung des Federstützringes und der Nabe kommen.

Der Erfindung liegt nun die Aufgabe zugrunde, eine Riemenscheibe der gattungsgemässen Art dadurch zu verbessern, dass zwischen dem Federstützring und der Nabe eine leicht verriegelbare und lösbare Formschlusssicherung vorgesehen wird, die nicht verschleissanfällig ist.

Diese Aufgabe wird bei einer gattungsgemässen Riemenschiebe nach der Neuerung dadurch gelöst, dass der Nutgrund der Radialnut der Nabe einen maximalen Radius gleich dem kleinsten Halbmesser des Nabenendabschnittes besitzt und der Flansch des Federstützringes gleich breit oder schmaler als die Radialnut der Nabe ist und dass zwischen den Polygonecken der Aufnahmeöffnung Aufnahmetaschen für die Polygonecken des Nabenendabschnittes in die Aussenflanke des Flansches eingesenkt sind.

Der besondere Vorteil einer erfindungsgemässen Riemenscheibe liegt darin, dass zum einen die Montage des Federstützringes und der Druckfedern sehr einfach ist. Der Federstützring wird in fluchtender Ausrichtung seiner polygonförmigen Aufnahmeöffnung mit dem polygonförmigen Endabschnitt der Nabe in Axialrichtung darauf soweit aufgeschoben, bis in Radialrichtung der Nabe der Flansch des Federstützringes mit der Radialnut der Nabe fluchtet. In dieser Stellung kann der Federstützring gegenüber der Nabe gedreht werden, wobei die Polygonecken des Nabenendabschnitts an der Aussenflanke des Flansches des Federstützringes entlangwandern. Der Federstützring wird soweit verdreht, bis in Axialrichtung gesehen die Polygonecken des Nabenendabschnitts mit den Aufnahmetaschen an der Aussenflanke des Stützring-Flansches fluchten. Beim Loslassen des Ringes in dieser Ausrichtung rasten die Polygonecken des Nabenendabschnittes unter der Wirkung der Druckfedern selbsttätig in die Aufnahmetaschen des Stützring-Flansches ein, wobei der Stützring unter der Kraft der Druckfedern in der Raststellung festgehalten wird. Da die Aufnahmetaschen formschlüssig an die Polygonecken des Nabenendabschnitts angepasst sind, ist eine weitestgehend spielfreie Mitnahme des Federstützringes durch die Nabe sichergestellt. Im übrigen kann man die Formschlusselemente des Nabenendabschnitts und am Flansch des Federstützringes so dimensionieren, dass ein vorzeitiger Verschleiss an dieser Kupplungsstelle nicht eintritt. Die Demontage des bajonettartig auf der Nabe festgelegten Federstützringes ist ebenso einfach, indem der Federstützring entgegen den Druckfedern zunächst so weit nach innen hin axial verschoben wird, bis die Polygonecken des Nabenendabschnitts aus den Aufnahmetaschen des Stützring-Flansches freikommen, wonach dann der Stützring mit seiner polygonförmigen Aufnahmeöffnung in eine fluchtende Ausrichtung mit dem polygonförmigen Nabenendabschnitt gebracht und von dort abgezogen werden kann.

Die besondere Ausbildung des Nabenendabschnitts behindert die drehfeste, jedoch verschiebliche Anbringung der Verstellscheibe auf der Nabe nicht. In vorteilhafter Ausbildung ist die gesamte Nabe also einschliesslich ihres Innenabschnitts, auf dem die Verstellscheibe gelagert ist, in fluchtender Ausrichtung zum Endabschnitt polygonförmig ausgebildet, wobei dann die Verstellscheibe eine entsprechende polygonförmige zentrale Aufnahmeöffnung hat.

Weitere vorteilhafte Ausgestaltungsmerkmale der Erfindung ergeben sich aus den Unteransprüchen und aus der nachstehenden Beschreibung.

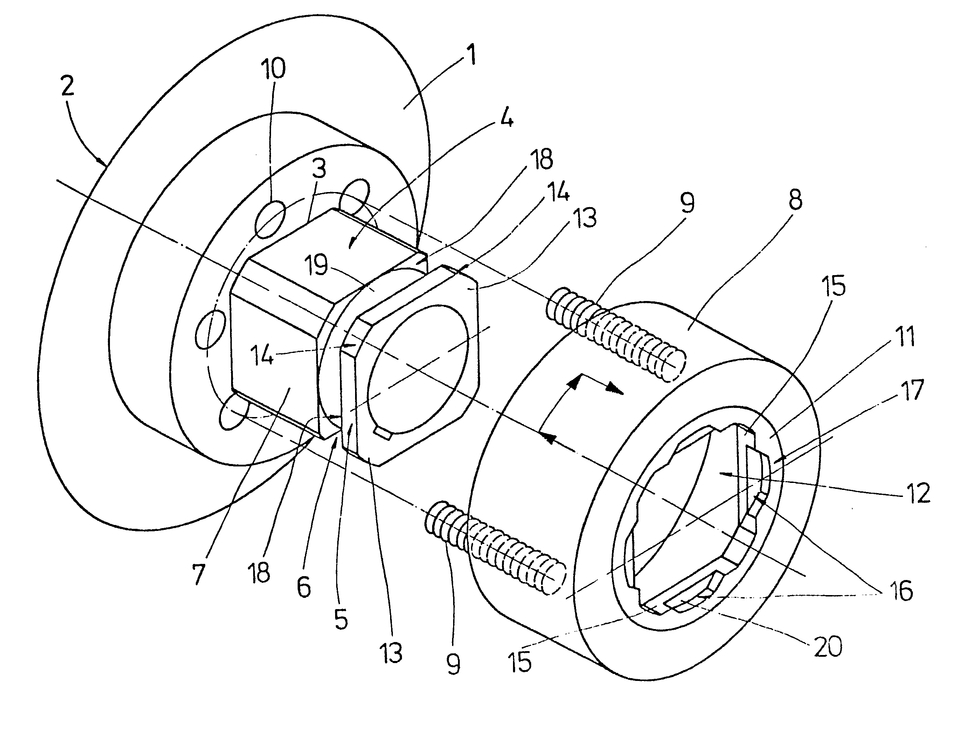

Die Erfindung wird nachfolgend anhand der Zeichnung an einem Ausführungsbeispiel noch näher erläutert. Die Zeichnung zeigt

in gesprengter perspektivischer Darstellung eine der federnden Verstellscheiben einer Riemenscheibe für ein Verstellgetriebe. Im einzelnen erkennt man in der Zeichnung eine Verstellscheibe 1, welche die Hälfte einer Riemenscheibe für ein stufenloses Verstellgetriebe darstellt. Die Verstellscheibe 1 besitzt eine Flankenseite 2, die im einzelnen nicht näher wiedergegeben ist. Auf einer Nabe 4 ist die Verstellscheibe 1 zum einen axial verschieblich und zum anderen drehfest angeordnet, wozu die Nabe 4 einen im Querschnitt polygonförmigen Innenabschnitt 7 besitzt, auf dem die Verstellscheibe 1 mit einer entsprechend ausgebildeten Aufnahmeöffnung 3 gelagert ist.

Die Nabe 4 besitzt einen Endabschnitt 5, der fluchtend zum Nabeninnenabschnitt 7 im Querschnitt polygonförmig ist, wobei das Querschnittspolygon ein regelmässiges Polygon, vorzugsweise ein Quadrat ist. Folglich besitzen der Nabenendabschnitt 5 und der Nabeninnenabschnitt 7 vier Ecken 13 bzw. Kanten, die mit Abrundungen 14 versehen sind.

Der Nabenendabschnitt 5 und der Nabeninnenabschnitt 7 werden durch eine Radialnut 6 getrennt, die in Radialrichtung der Nabe 4 verlaufende, parallele Flanken 18 hat. Die Radialnut 6 ist so tief in die Nabe 4 eingestochen, dass der Nutgrund 19 im Bereich des geringsten Polygon-Durchmessers gerade die Aussenflächen des Nabenendabschnitts 5 und des Nebeninnenabschnitts 7 entlang der achsparallelen Mittellinie tangiert.

Auf die Nabe 4 kann über den Endabschnitt 5 hinweg ein Federstützring 8 aufgesetzt werden, der dazu eine polygonförmige, zentrale Aufnahmeöffnung 12 besitzt. Zwischen dem Federstützring 8 und der Aussenseite der Verstellscheibe 1 werden Druckfedern 9 angeordnet, die in Bohrungen 10 an der Aussenseite der Verstellscheibe 1 eintauchen. Entgegen der Kraft dieser Druckfedern 9 wird der Federstützring 8 auf der Nabe 4 festgelegt, wodurch die Verstellscheibe 1 ständig durch die Federkraft in Richtung vom Nabenendabschnitt 5 weggedrückt wird. Die Druckfedern 9 werden zweckmässig achsparallel zur Nabe 4 zwischen der Verstellscheibe 1 und dem Federstützring 8 angeordnet und verteilen sich in Umfangsrichtung gleichmässig. Grundsätzlich kann auch nur eine einzige koaxial zur Nabe 4 liegende Druckfeder zwischen dem Federstützring 8 und der Verstellscheibe 1 vorgesehen werden.

Die polygonförmige Aufnahmeöffnung 12 des Federstützringes 8 stellt eine Negativkontur des Polygon-Querschnitts des Nabenendabschnitts 5 dar. Folglich besitzt die Aufnahmeöffnung 12 ebenfalls Polygonecken 15, die entsprechend denen des Nabenendabschnitts 5 abgeflacht oder gerundet sind. Die polygonförmige Aufnahmeöffnung 12 wird durch einen in Radialrichtung verlaufenden Innenflansch 11 am Stützring 8 umschlossen, der gleich breit oder schmaler als die Radialnut 6 der Nabe 4 ist. Dadurch kann der Federstützring 8 in fluchtender Ausrichtung seiner polygonförmigen Aufnahmeöffnung 12 mit dem polygonförmigen Endabschnitt 5 auf die Nabe 4 aufgesteckt werden, bis in fluchtender Ausrichtung des Stützringflansches 11 mit der Radialnut 6 der Nabe 4 der Stützring 8 relativ zur Nabe 4 gedreht werden kann. Bei der Drehung bewegen sich dann die Polygonecken 13 des Nabenendabschnittes 5 entlang der Aussenflanke 17 des Stützringflansches 11.

In die Aussenflanke 17 des Stützringflansches 11 sind nun Aufnahmetaschen 16 eingearbeitet, die formschlüssig an die Polygonecken 13 des Nabenendabschnitts 5 angepasst sind. In fluchtender Ausrichtung können durch Axialverschiebung des Federstützringes 8 nach aussen hin die Polygonecken 13 des Nabenendabschnitts 5 in Eingriff mit den Aufnahmetaschen 16 des Stützringflansches 11 gebracht werden. In dieser Anordnung ist der Federstützring 8 selbsttätig durch die Druckfedern 9 gesichert, gegen deren Kraft der Federstützring 8 axial verschoben werden muss, wenn die Ecken 13 des Nabenendabschnitts 5 wieder ausser Eingriff mit den Aufnahmetaschen 16 am Stützringflansch 11 gebracht werden sollen. Die Aufnahmetaschen 16 am Stützringflansch 11 sind um eine halbe Polygonteilung gegenüber den Polygonecken 15 der Aufnahmeöffnung 12 versetzt. Dieser Versatz beträgt entsprechend der quadratischen Form der Aufnahmeöffnung 12 45 Grad. Sowohl die Innen- als auch die Aussenflanke 17 des Stützringflansches 11 sind in Radialrichtung zur Naben- und Stützringachse angeordnet; das gleiche trifft für die nach innen hin liegenden Anschlagseiten 20 der Aufnahmetaschen 16 zu.

**Patentansprüche**

1. Riemenschiebe für ein Verstellgetriebe mit zumindest einer auf einer Nabe (4) axial verschieblichen und darauf drehfest gelagerten Verstellscheibe (1) sowie mit einem koaxial nach aussen hin auf der Nabe (4) festgelegten Federstützring (8), zwischen dem und der Verstellscheibe (1) wenigstens eine Druckfeder (9) angeordnet ist, wobei die Nabe (4) einen im Querschnitt polygonförmigen Endabschnitt (5) sowie daran nach innen hin anschliessend eine Radialnut (6) hat und der Federstützring (8) einen radial nach innen gerichteten Flansch (11) aufweist sowie eine zentrale, polygonförmige Aufnahmeöffnung (12) umschliesst, welche eine Negativkontur zum Nabenabschnitt (5) besitzt, dadurch gekennzeichnet, dass der Nutgrund (19) der Radialnut (6) der Nabe (4) einen maximalen Radius gleich dem kleinsten Halbmesser des Nabenendabschnittes (5) besitzt und der Flansch (11) des Federstützringes (8) gleich breit oder schmaler als die Radialnut (6) der Nabe (4) ist und dass zwischen den Polygonecken (15) der Aufnahmeöffnung (12) Aufnahmetaschen (16) für die Polygonecken (13) des Nabenendabschnittes (5) in die Aussenflanke (17) des Flansches (11) eingesenkt sind.

2. Riemenscheibe nach Anspruch 1, dadurch gekennzeichnet, dass die Radialnut (6) der Nabe (4) und der Flansch (11) des Stützringes (8) parallele, in Radialrichtung verlaufende Flanken (17, 18) haben.

3. Riemenscheibe nach Anspruch 1 oder 2, dadurch gekennzeichnet, dass die Aufnahmetaschen (16) am Flansch (11) des Stützringes (8) um eine halbe Polygon-Teilung gegenüber den Polygonecken (15) der Aufnahmeöffnung (12) versetzt sind.

4. Riemenscheibe nach einem Ansprüche 1 bis 3, dadurch gekennzeichnet, dass eine oder mehrere Druckfedern (9) zur zentralen Achse koaxial zwischen der Verstellscheibe (1) und dem Federstützring (8) angeordnet sind.

5. Riemenscheibe nach einem der Ansprüche 1 bis 4, dadurch gekennzeichnet, dass die Polygonecken (13, 15) des Nabenendabschnitts (5) und der Aufnahmeöffnung (12) des Federstützringes (8) abgeflacht oder -gerundet sind.

6. Riemenscheibe nach einem der Ansprüche 1 bis 5, dadurch gekennzeichnet, dass die Nabe (5) einen von innen her an die Radialnut (6) anschliessenden Innenabschnitt (7) hat, auf dem die Verstellscheibe (1) gelagert ist und der in fluchtender Ausrichtung zum Nabenendabschnitt (5) im Querschnitt polygonförmig ist, wobei die Verstellscheibe (1) eine entsprechende Polygon-Aufnahmeöffnung (3) hat.

7. Riemenscheibe nach einem der Ansprüche 1 bis 6, dadurch gekennzeichnet, dass der Querschnitt des Nabenendabschnitts (5) und der Aufnahmeöffnung (12) des Federstützringes (8) ein regelmässiges Polygon ist.

8. Riemenscheibe nach Anspruch 7, dadurch gekennzeichnet, dass das Querschnittspolygon ein Quadrat ist.


**Claims**

1. Belt pulley for a variable transmission, with at least one adjusting disc (1) axially displaceable on a hub (4) and mounted fixedly in terms of rotation on the latter, and with a spring thrust ring (8) which is fixed on the hub (4) coaxially in the outward direction and between which and the adjusting disc (1) at least one compression spring (9) is arranged, the hub (4) having an end portion (5) of polygonal cross-section and a radial groove (6) adjacent to the latter in the inward direction, and the spring thrust ring (8) possessing a radially inward-directed flange (11) and enclosing a central polygonal receiving orifice (12) having a negative contour matching that of the hub portion (5), characterized in that the groove bottom (19) of the radial groove (6) of the hub (4) has a maximum radius equal ot the smallest radius of the hub end portion (5), and the flange (11) of the spring thrust ring (8) is equal in width to or narrower than the radial groove (6) in the hub (4), and in that, between the corners (15) of the polygon of the receiving orifice (12), receiving pockets (16) for the corners (13) of the polygon of the hub end portion (5) are cut in the outer flank (17) of the flange (11).

2. Belt pulley according to Claim 1, characterized in that the radial groove (6) in the hub (4) and the flange (11) of the thrust ring (8) have parallel flanks (17, 18) extending in the radial direction.

3. Belt pulley according to Claim 1 or 2, characterized in that the receiving pockets (16) in the flange (11) of the thrust ring (8) are offset half a polygon division relative to the corners (15) of the polygon of the receiving orifice (12).

4. Belt pulley according to one of Claims 1 to 3, characterized in that one or more compression springs (9) are arranged coaxially relative to the central axis between the adjusting disc (1) and the spring thrust ring (8).

5. Belt pulley according to one of Claims 1 to 4, characterized in that the corners (13, 15) of the polygon of the hub end portion (5) and of the receiving orifice (12) in the spring thrust ring (8) are flattened or rounded.

6. Belt pulley according to one of Claims 1 to 5, characterized in that the hub (5) has an inner portion (7) which is adjacent to the radial groove (6) in the outward direction and on which the adjusting disc (1) is mounted, and which is of polygonal cross-section and is in alignment with the hub end portion (5), the adjusting disc (1) having a corresponding polygonal receiving orifice (3).

7. Belt pulley according to one of Claims 1 to 6, characterized in that the cross-section of the hub end portion (5) and of the receiving orifice (12) in the spring thrust ring (8) is a regular polygon.

8. Belt pulley according to Claim 7, characterized in that the cross-sectional polygon is a square.


**Revendications**

1. Poulie à courroie destinée à un mécanisme ajustable avec au moins un disque réglable (1) coulissant axialement sur un moyeu (4) mais empêché de tourner par rapport à celui-ci, ainsi qu'avec une bague (8) d'appui à ressorts fixée coaxialement vers l'extérieur sur le moyeu (4), dans laquelle au moins un ressort de pression (9) est disposé entre cette bague et le disque réglable (1), et dans laquelle le moyeu comporte une portion terminale (5) de section polygonale ainsi qu'une rainure radiale (6) jouxtant celle-ci vers l'intérieur et où la bague (8) d'appui à ressorts comporte une bride (11) dirigée radialement vers l'intérieur et entoure un passage central (12) polygonal qui possède un contour conjugué à celui de la portion (5) du moyeu, caractérisée en ce que le fond (19) de la rainure raidale (6) du moyeu (4) possède un rayon maximum égal au plus petit rayon de la portion terminale (5) du moyeu et la bride (11) de la bague (8) d'appui à ressorts a une largeur égale ou inférieure à celle de la rainure radiale (6) du moyen (4) et en ce que des pochettes (16) sont ménagées dans le flanc extérieur (17) de la bride (11), entre les angles (15) du polygone du passage (12), pour recevoir les angles (13) du polygone de la portion terminale (5) du moyeu.

2. Poulie à courroie suivant la revendication 1, caractérisée en ce que la rainure radiale (6) du moyeu (4) et la bride (11) de la bague d'appui (8) possèdent des flancs (17, 18) parallèles orientés en direction radiale.

3. Poulie à courroie suivant la revendication 1 ou 2, caractérisée en ce que les pochettes (16) ménagées dans la bride (11) de la bague d'appui (8) sont décalées d'une demi-division polygonale par rapport aux angles (15) du polygone du passage (12).

4. Poulie à courroie suivant une des revendications 1 à 3, caractérisée en ce que un ou plusieurs ressorts de pression (9) son disposés coaxialement à l'axe central entre le disque réglable (1) et la bague (8) d'appui à ressorts.

5. Poulie à courroie suivant une des revendications 1 à 4, caractérisée en ce que les angles (13, 15) des polygones de la portion terminale (5) du moyeu et du passage (12) de la bague (8) d'appui à ressorts sont aplatis ou arrondis.

6. Poulie à courroie suivant une des revendications 1 à 5, caractérisée en ce que le moyeu (4) comporte une portion interne (7) jouxtant la rainure radiale (6) vers l'intérieur, portion qui porte le disque réglable (1) et qui présente une section polygonale en alignement avec la portion terminale (5) du moyeu, le disque réglable (1) présentant un passage polygonal (3) correspondant.

7. Poulie à courroie suivant une des revendications 1 à 6, caractérisée en ce que la section de la portion terminale (5) du moyeu et celle du passage (12) de la bague (8) d'appui à ressorts sont des polygones réguliers.

8. Poulie à courroie suivant la revendication 7, caractérisée en ce que le polygone des sections est un carré.